# EUROPEAN PATENT SPECIFICATION

(11) **EP 1 871 828 B1**
(45) Date of publication and mention of the grant of the patent: **25.08.2010**
(21) Application number: 06737307.6
(22) Date of filing: 07.03.2006
(51) Int. Cl.: C08K 5/00, C08K 5/3492, C08K 5/3435

(54) **COMPOSITIONS AND METHOD FOR PREVENTING THE PHOTODECOMPOSITION OF CYCLIC OLEFIN COPOLYMERS**
ZUSAMMENSETZUNGEN UND VERFAHREN ZUR VERHINDERUNG DES LICHTZERFALLS ZYKLISCHER OLEFIN-COPOLYMERE
COMPOSITIONS ET PROCEDES DE PREVENTION DE LA PHOTODECOMPOSITION DE COPOLYMERES D'OLEFINE CYCLIQUE

(30) Priority: 07.04.2005 US 669119 P
(43) Date of publication of application: 02.01.2008
(73) Proprietor: CYTEC TECHNOLOGY CORP., Wilmington, Delaware 19801 (US)
(72) Inventor: ZENNER, John Mathew, Fairfield, Connecticut 06430 (US)
(74) Representative: Bowman, Paul Alan
(86) International application number: PCT/US2006/008122
(87) International publication number: WO 2006/110236

(56) References cited:
- EP-A- 1 500 675
- EP-A- 1 571 177
- WO-A-03/057772
- US-A- 5 185 445

## Description

### FIELD OF THE INVENTION

The invention is directed to compositions and their use in protecting cyclic olefin copolymeric materials from ultraviolet radiation or light ("UV light"). In particular, the invention relates to compositions comprising synergistic combinations of at least one ortho-hydroxy tris-aryl-triazine UV light absorber and at least one low molecular weight hindered amine light stabilizers ("HALS"). The composition can further comprise at least one oligomeric HALS.

### BACKGROUND OF THE INVENTION

Recently, several companies have introduced a line of cyclic olefin copolymers with ethylene (COP). These materials have excellent optical properties, higher UV transmission than acrylic or polycarbonate, good dimensional stability, good heat deflection and good oxygen and water barrier properties. Among the possible applications for these COP materials are lenses for data storage/retrieval systems, light diffusers and light guides for LCD's and housings for HID lamps. However, COP's are limited in many of these applications because of poor light stability.

It is well-known that ultraviolet (UV) light or radiation, particularly from sunlight, can degrade polymers such as COPs, often resulting in embrittlement, yellowing or hazing. However, this degradation can be inhibited by the incorporation of ultra-violet light stabilizers and ultra-violet light absorbers in or on articles made from the polymers.

For example, the use of HALS and UV light absorbers ("UVA"), both individually and in combination, to stabilize polymeric materials is generally known in the art. In particular, UV light absorbers such as benzotriazoles and benzophenones were initially used to stabilize polymeric materials, and to prevent the degradation of such materials from exposure to UV light. Later, it was discovered that HALS, which scavenge free radicals formed in the polymeric material when exposed to UV light, were more effective than UV light absorbers, and thus, UV light absorbers are presently used in combination with at least one HALS in most conventional applications.

U.S. Patent No. 4,619,956 discloses a method of stabilizing a polyolefin polymer film, coating, or molded article against the action of light, moisture, and oxygen. The method comprises incorporating a HALS and a tris-aryl-2-triazine UV light absorber into the polymer.

Each of the UV light absorbers and HALS are used in an amount of from about 0.01 to about 5 percent by weight, but only formulations having equal amounts of UV light absorber and HALS are exemplified. The compositions are said to be effective in stabilizing the polymeric material, which does not begin to lose gloss or tum yellow until after about 1,000 to about 2,400 hours of exposure to UV light.

U.S. Patent No. 4,331,586 to Hardy discloses oligomers for use as light stabilizers. While providing protection for polymeric materials such as polypropylene, polymeric films containing the disclosed oligomeric HALS became brittle after exposure to UV light for about 1,700 hours.

Therefore, a need remains for compositions and methods of use thereof that stabilize cyclic olefin copolymers and provide protection from exposure to UV light for extended periods of time. The present invention provides such methods and compositions.

### SUMMARY OF THE INVENTION

The present invention is directed to UV stabilized cyclic olefin polymers and articles made therefrom, such as data storage/retrieval systems, light diffusers and light guides for LCD's and housings for HID lamps. The article according to the present invention comprises a cyclic olefin polymeric material, from 50 to 5,000 ppm of at least one ortho hydroxy tris-aryl triazine light absorber and from 500 ppm to 1.25 percent of at least one low molecular weight HALS having a molecular weight of less than 500, wherein the weight ratio of HALS to triazine is from about 3:1 to 20:1, preferably, from about 5:1 to about 10:1, and most preferably from about 6:1 to 7.5:1. Preferably, the polymeric article is a molded or extruded article having a thickness of no less than 1 mm.

Low molecular weight HALS useful in the present invention are mono or difunctional HALS having a molecular weight less than about 500 and include, but are not limited to:

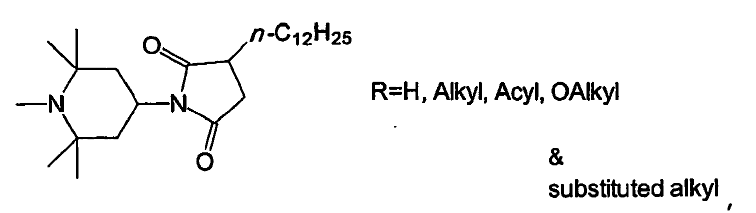

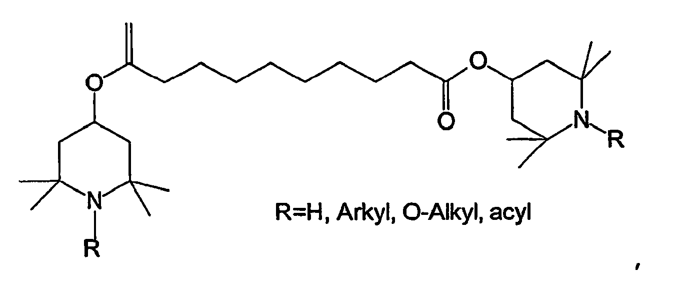

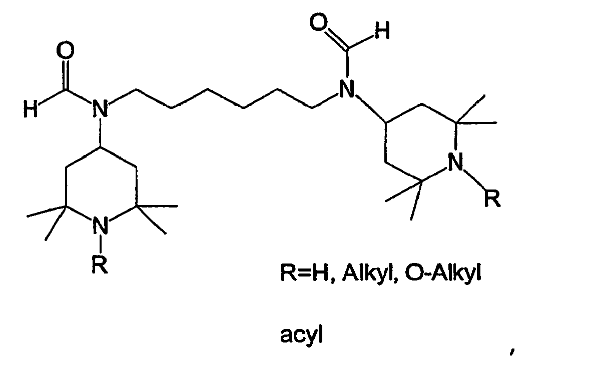

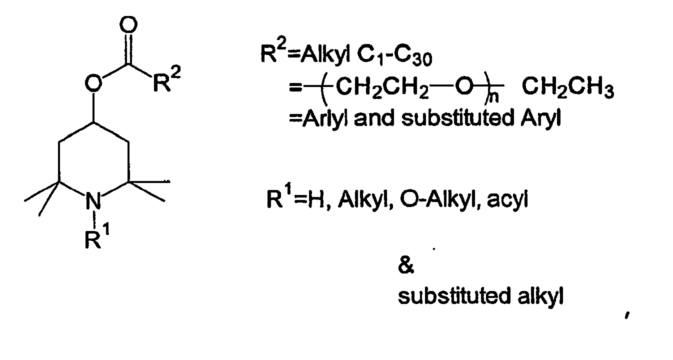

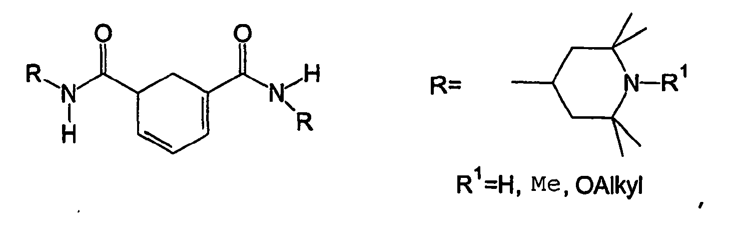

Bis(1-octyloxy-2,2,6,6,tetramethyl-4-piperdinyl)sebacate, and Dimethyl succinate polymer with 4-hydroxy-2,2,6,6-tetramethyl-1-piperidineethanol.

Oligomeric HALS useful as the third optional component in the invention which are present in a mass fraction of from 20 ppm to 5000 ppm in the polymeric article include, but are not limited to oligomers of formula (I) 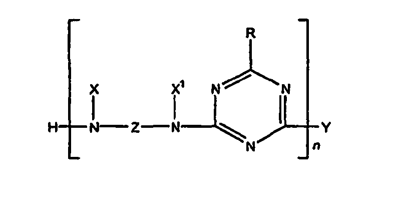 wherein R is morpholino, C₁-C₈ alkylamine, di(C₁-C₈) alkylamine, pyrrolidyl, or cyclohexylamine, X and X¹, which are the same or different, and are hydrogen, C₁-C₂₀ alkyl, or a radical of formula (II) 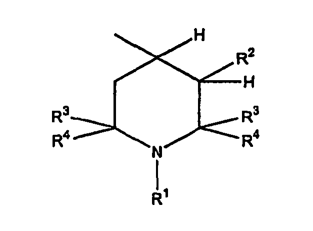 wherein R¹ represents hydrogen, C₂-C₃ hydroxyalkyl, C₁-C₈ alkyl, acyl, alkoxyl, hydroxyl, or oxyl; R² represents hydrogen, C₁-C₈ alkyl, or benzyl; R³ and R⁴, are the same or different, and are C₁-C₈ alkyl, benzyl, or phenethyl, or from a C₅-C₁₀ cycloalkyl; Z is a straight chained or branched C₂-C₂₀ alkylene or a straight chained or branched C₂-C₂₀ alkylene chain interrupted by at least oxy, thio, or 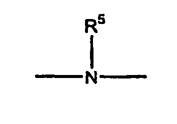 radical, wherein R⁵ is hydrogen, C₁-C₂₀ alkyl, or the radical of formula (II); C₅-C₁₀ cycloalkylene, 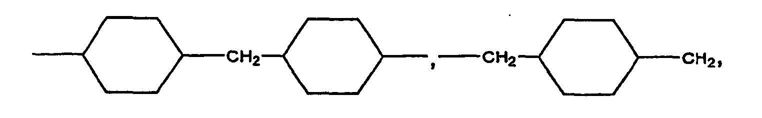 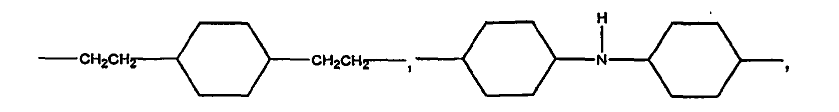 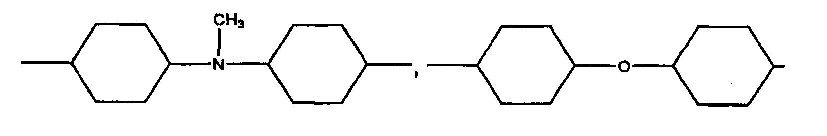 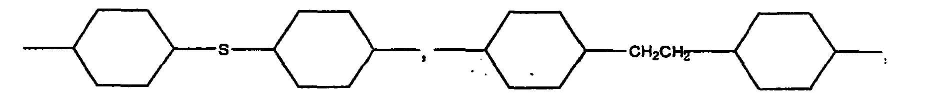 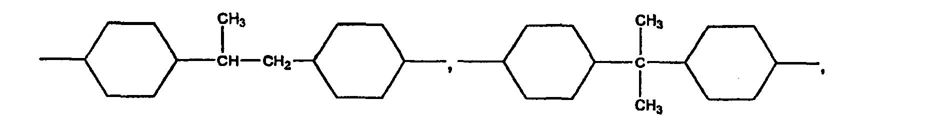 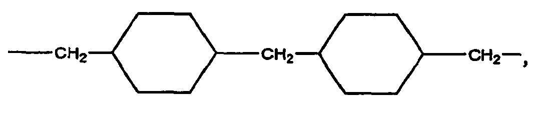 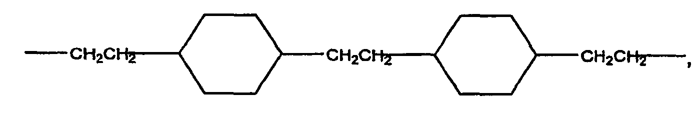 or 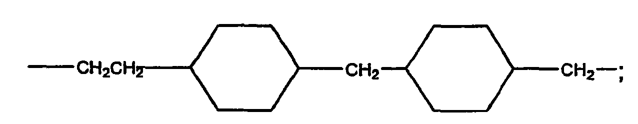 C₆-C₁₂ arylene, or C₈-C₁₄ aralkylene; n is an integer greater than 1; and Y is a halogen atom, C₁-C₈ alkylamine, di(C₁-C₈) alkylamine, pyrrolidyl, morpholino, cyclohexylamine, or 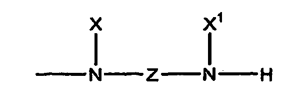 wherein X, X¹, and Z are as previously defined; with the proviso that at least one of X and X¹ is of formula (II). Most preferably, X and X¹ are the same or different, and are of formula (II), wherein R is morpholino or octylamine, R¹ is H or CH₃, R² is H, R³ and R⁴ are CH₃, Z is C₆H₁₂, and Y is morpholino, octylamine, or 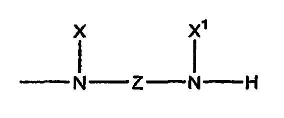 wherein X, X¹, and Z are as previously defined.

Typically, the triazine light absorber is of formula (III) 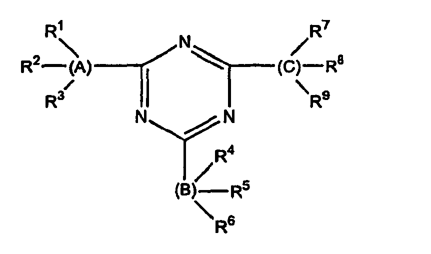 wherein 2 or 3 of A, B and C.are aromatic, at least one of A, B and C is substituted by a hydroxy group ortho of the point of attachment to the triazine ring, and each of R¹ through R⁹ is selected from the group consisting of hydrogen, hydroxy, alkyl, alkoxy, sulfonic, carboxy, halo, haloalkyl and acylamino. Preferably, the triazine light absorber is of formula (IV) 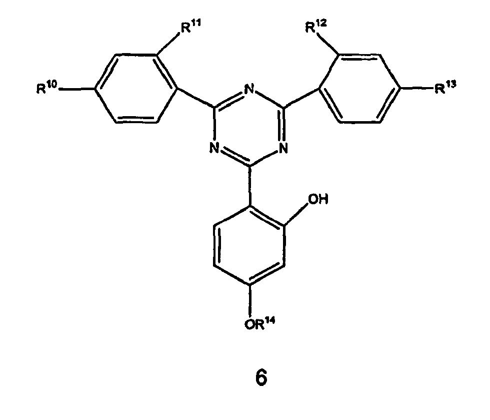 where R¹⁰, R¹¹, R¹² and R¹³ are the same or different, and are individually selected from the group consisting of hydrogen, hydroxy, alkyl, alkoxy, sulfonic, carboxy, halo, haloalkyl and acylamino, and R¹⁴ is hydrogen or C₁ to C₁₈ alkyl. Most preferably, R¹⁰, R¹¹, R¹² and R¹³ are H or CH₃, and R¹⁴ is hydrogen, C₆H₁₃, or C₈H₁₇.

Other useful triazine light absorbers include, but are not limited to
2-(4,6-Diphenyl-1,3,5-triazine-2-yl)-5-(hexyl)oxy-phenol,
2-(4-((2-hydroxy-3-dodecyloxypropyl)-oxyl-2-hydroxyphenyl)-4,6-bis(2,4-dimethylphenyl)-1, 3,5-triazine, 2-(4-((2-hydroxy-3-tridecyloxypropyl)-oxyl-2-hydroxyphenyl)-4,6-bis(2,4-dimethylphenyl)-1,3,5-triazine,
2-(4-((2-hydroxy-3-tridecyloxypropyl)-oxyl-2-hydroxyphenyl)-4,6-bis(2,4-dimethylphenyl)-1,3,5-triazine, and
2-(4-((2-hydroxy-3-isooctyloxyypropyl)-oxyl-2-hydroxyphenyl)-4,6-bis(2,4-dimethylphenyl)-1, 3,5-triazine, and blends thereof.

Preferably, the light stabilized polymeric article is formed from a copolymer, and most preferably from a cyclic olefin copolymer and can be a product of polymerization in accordance with the following: 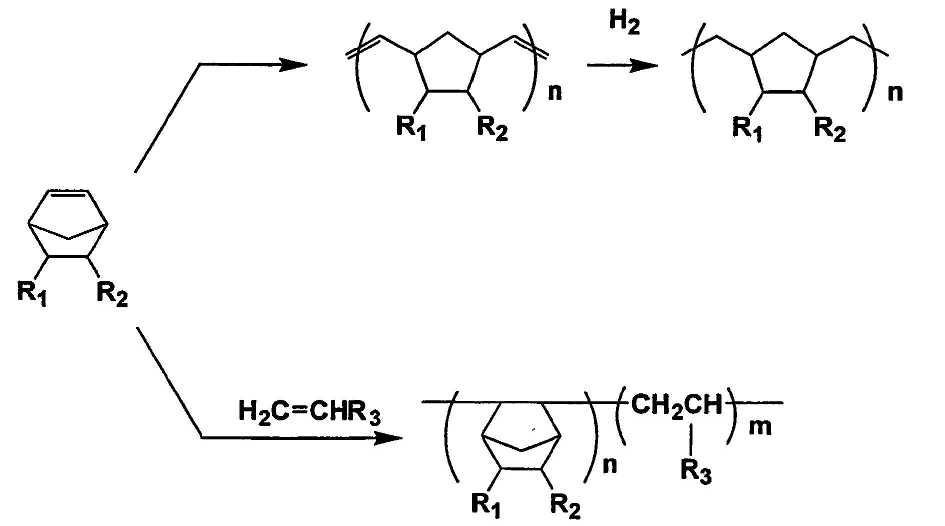 wherein R 1, R2, R3 are H.

Cyclic olefin polymers useful in the present invention include but are not limited to

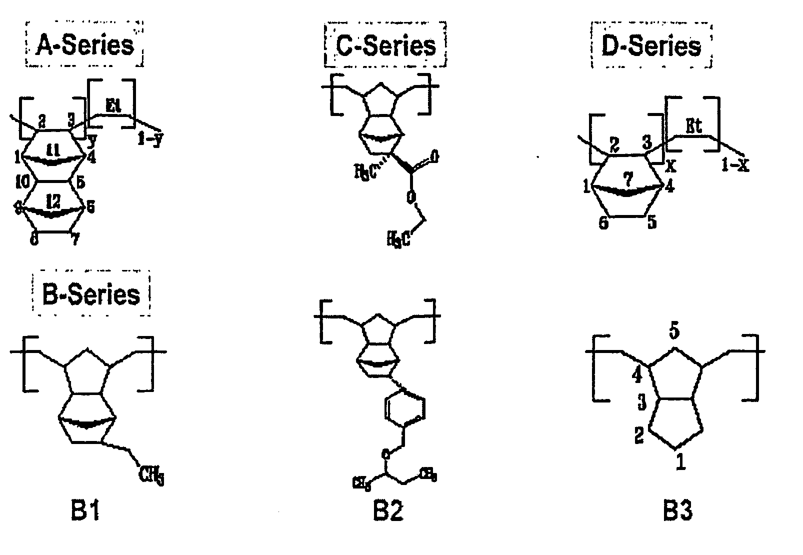

The present invention is also directed to a light stabilization additive composition, comprising at least one ortho hydroxy tris-aryl triazine light absorber and at least one low molecular weight HALS having a molecular weight of less than 500, and optionally at least one oligomeric HALS wherein the weight ratio of HALS to triazine light absorber is from 3:1 to 20:1, more preferably from 7:1 to 20:1 and to a light stabilization additive concentrate, comprising from 30 to 98 percent, preferably from 50 to 95 percent, by weight of a cylic olefin polymeric resin, at least one ortho hydroxy tris-aryl triazine light absorber and at least one low molecular weight HALS having a molecular weight of less than 500, and optionally at least one oligomeric HALS wherein the weight ratio of HALS to triazine light absorber is from 3:1 to 20:1, more preferably from 7:1 to 20:1 where the concentrate may be in the form of pellets, prills, or pastilles. The additive composition may be formed by spraying solutions of the light absorber and HALS, melt blending, extrusion, or by physical compaction.

The present invention is further directed to a method of forming a stabilized polymeric article. The method comprises blending a polymeric material with from 50 to 5,000 ppm of at least one ortho hydroxy tris-aryl triazine light absorber and from 500 ppm to 1.25 percent of at least one oligomeric, polymeric, or high molecular weight HALS having a molecular weight of at least 500, wherein the weight ratio of HALS to triazine light absorber is from 3:1 to 20:1, to form a stabilized polymeric composition, and forming an extruded or molded article or a biaxially oriented tape or film from the stabilized polymeric composition.

### DETAILED DESCRIPTION OF THE INVENTION

The present invention is directed to compositions for stabilizing polymeric materials, such as molded or extruded articles, biaxially oriented tapes and films, and coatings, to prevent degradation from exposure to UV light. It has been unexpectedly discovered that when from 50 to 5,000 ppm (parts per million) of an ortho hydroxy tris-aryl triazine and from 500 ppm to 1.25 percent of an low molecular weight HALS is blended with a cyclic olefin polymer material in a weight ratio of HALS to triazine of from 1:1 to 20:1, preferably from 7:1 to 10:1, the cyclic olefin polymer material is protected from exposure to UV Light for a period of time substantially greater than afforded by any prior art light stabilizer composition containing a HALS, a UV light absorber, or a combination thereof.

Suitable oligomeric HALS for use as the optional third component are oligomers of the type disclosed in U.S. Patent No. 4,331,586.

Oligomeric HALS useful in the invention include, but are not limited to oligomers of formula (I) 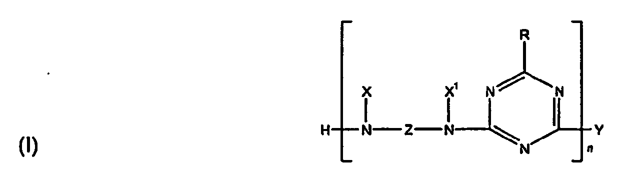 wherein R is morpholino, C₁-C₈ alkylamine, di(C₁-C₈) alkylamine, pyrrolidyl, or cyclohexylamino, and is preferably morpholino or octylamine, X and X¹, which are the same or different, represent hydrogen, C₁-C₂₀ alkyl, or the radical (II) 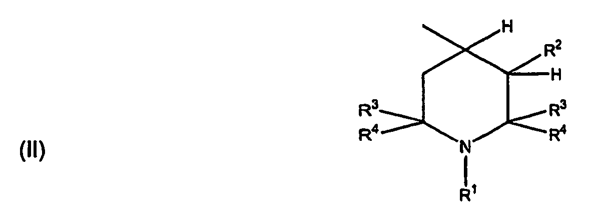 where R¹ represents hydrogen, C₂-C₃ hydroxyalkyl, C₁-C₈ alkyl, hydroxyl, or oxyl; R² represents hydrogen, C₁-C₈ alkyl, or benzyl; R³ and R⁴, which may be the same or different, represent C₁-C₈ alkyl, benzyl, or phenethyl, or together with the carbon to which they are attached form a C₅-C₁₀ cycloalkyl; Z represents C₂₋₂₀ straight chained or branched alkylene, where the alkaline chain may be interrupted by oxy, thio, or 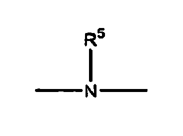 radicals, wherein R⁵ represents hydrogen, C₁-C₂₀ alkyl, or the radical (II); C₅-C₁₀ cycloalkylene, 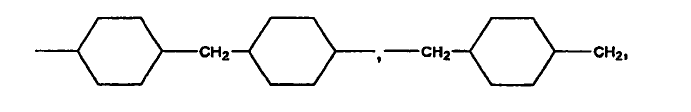 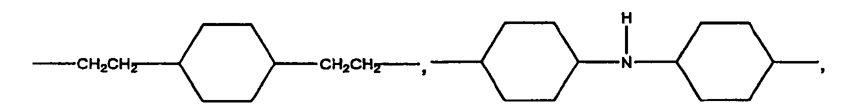 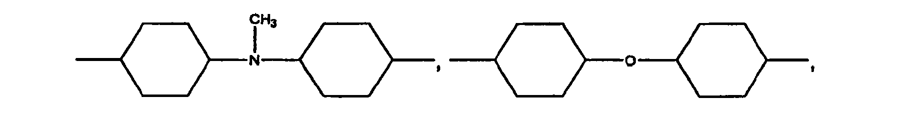 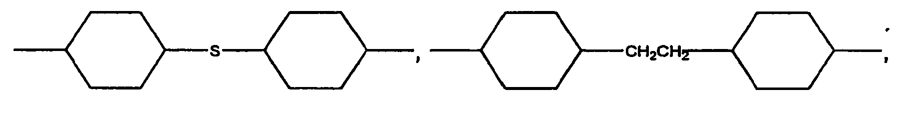 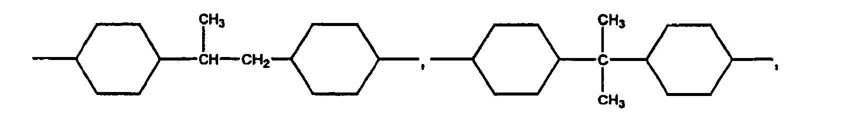 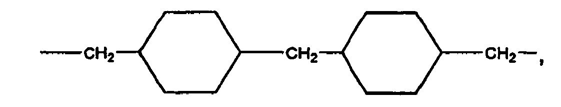 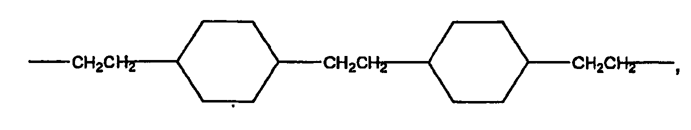 or 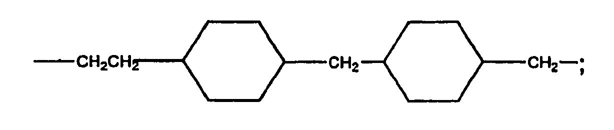 C₅-C₁₂ arylene, or C₈-C₁₄ aralkylene; n is an integer greater than 1; and, Y represents a halogen atom, C₁-C₈ alkylamine, di(C₁-C₆) alkylamine, pyrrolidyl, morpholino, or 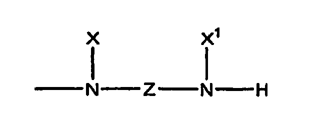 wherein X, X¹, and Z are as previously defined; with the proviso that at least one piperidinyl moiety of formula (II) is present in the repeating unit.

The preferred compositions of formula (I) are those wherein both X and X¹ are the moiety of formula (II). The especially preferred compositions of formula (I) are those wherein X and X¹ are 2,2,6,6-tetramethyl-4-piperidinyl, and Z is hexamethylene. V

Ortho hydroxy tris-aryl triazines useful in the present invention as UV light absorbers are of the type disclosed in U.S. Patent No. 4,619,956. Generally, the triazine light absorber of the invention is of the formula (III) 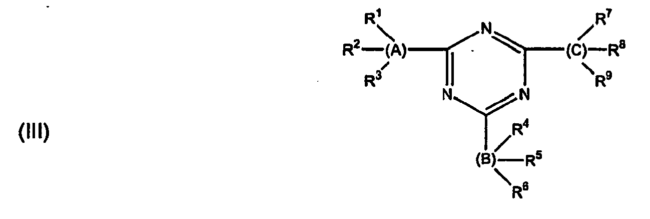 wherein 2 or three of A, B and C are each aromatic, at least one of A, B and C is substituted by a hydroxy group ortho of the point of attachment to the triazine ring, and each of R¹ through R⁹ is selected from the group consisting of hydrogen, hydroxy, alkyl, alkoxy, sulfonic, carboy, halo, haloalkyl and acylamino.

Preferably, the triazine light absorber is of formula (IV) 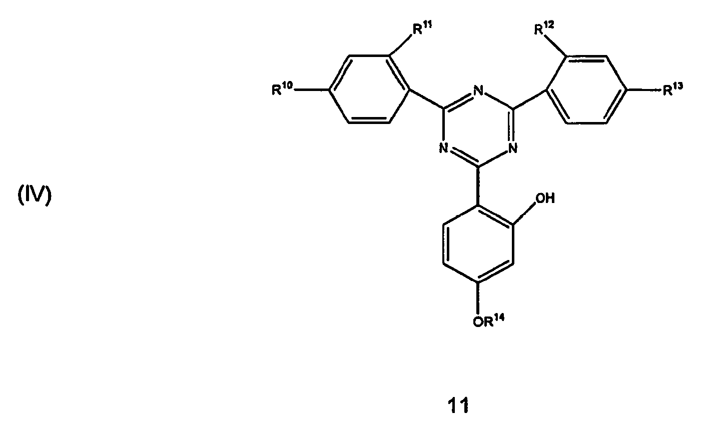 V Useful oligomeric HALS are preferably those of claim 6.
where R¹⁰, R¹¹, R¹² and R¹³ are as described above for R¹ to R⁹, and are most preferably H or CH₃, and R¹⁴ is hydrogen or C₁ to C₁₈ alkyl with hydrogen, C₆ alkyl, and C₈ alkyl being most preferred.

Typically, a COP article, such as a molded or extruded article or a biaxially oriented tape or film, may be stabilized in the present invention by blending from 50 to 2,000 ppm of the triazine light absorber of the invention and from 250 to 5000 ppm, based on the weight of the cyclic olefin material, of the low molecular weight HALS of the invention with a cylclic olefin polymeric material used to form the article. Optionally, from 250 ppm to 5000 ppm of an oligomeric HALS can be added. The ratio of total HALS to triazine light absorber is typically from 20:1 to 10:1, preferably from 10:1 to 1:1, and most preferably from 20:1 to 7:1.

Although the low molecular weight HALS, optional oligomeric HALS and triazine light absorber of the invention may be added to the COP material individually during processing of the COP material by any means known in the art, a mixture of the two components may be formed prior to processing. Typically, the additive composition of the invention is formed into pellets, prills, or pastilles comprising the HALS and UV light absorbers of the invention. This may be accomplished by melting the HALS and the triazine together, and extruding the mixture, spraying solutions of the two components together to form pellets or prills of the mixture upon the evaporation of the solvent, or by physical compaction.

The light stabilization additive composition of the invention may also be provided in the form of a concentrate containing from 2 to 70 percent, and preferably from 5 to 50 percent of the additive composition with the remainder comprising COP resin, and where the ratio of HALS to triazine light absorber i s typically from 20:1 to 1:1, preferably from 10:1 to 7:1.

Optionally, the compositions may contain other additives, especially additives such as antioxidants, supplemental light stabilizers, plasticizers, flame retardants, antistatic and antislipping agents, fillers, dyes, pigments, and the like.

Suitable antioxidants include those of the hindered phenol type, such as 2,6-di-t-butyl-p-cresol; 4,4'-bis(2,6-di-t-butylphenol); tetrakisp[methylene(3,5-ditert-butyl)4-hydroxy- hydrocinnamate)]methane; 1,3,5-tris(4-tert-butyl-3-hydroxy-2,6-dimethylbenzyl)-1,3,5- triazine-2,4,6-(1H,3H,5H)-trione; 1,3,5-tris(3,5-di-tert-butyl-4-hydroxybenzyl)-s-triazine-2,4,6-(1H,3H,5H)-trione; tris(2,4-ditert-butylphenyl)phosphite; bis(2,4-dit-butylphenyl)pentaerythritol diphosphite; 2[[2,4,8,10-tetrakis(1,1-dimethylethyl)dibenzo[d,f][1,3,2] dioxaphosphepin-6-yl]oxy]-N,N-bis[2[[2,4,8,10-tetrakis(1,1-dimethylethyl)dibenzo[d,f][1,3,2]dioxaphosphepin-6-yl]oxy] ethanamine; oxidized bis(tallow alkyl) amines; 4,4'-bis(2,6-diisopropylphenol); 2,4,6-tri-t-butylphenol; 2,21-thiobis(4-methyl-6-t-butyl phenol); octadecyl 2(3',5'-di-t-butyl-4-'hydroxyphenyl)-propionate, etc; esters of thiodipropionic acid, such as dilauryl thiodipropionate and distearyl thiodipropionate, etc; hydrocarbyl phosphites, such as triphenyl phosphite, trinonyl phosphite, diisodecyl pentaerythritol diphosphate, diphenyldecyl phosphite, etc; and combinations thereof.

Suitable supplemental light stabilizers include those of the benzotriazole class, such as 2-(2'-hydroxy-5-t-octylphenyl)benzotriazole; 2(2'-hydroxy-3=-5=-di-t-butylphenyl)-5-chlorobenzotriazole; those of the hydroxybenzophenone type, such as 2-hydroxy-4-methoxybenzophenone; 2-hydroxy-4-octyloxybenzophenone; 2,2'-dihydroxy-4,4'-di-methoxybenzophenone; hindered phenol esters, such as n-hexadecyl 3,5-di-t-butyl-4-hydroxybenzoate, and -2'4'-di-t-butylphenyl 3,5-di-butyl-4-hydroxybenzoate; metal complexes of 2,2'-thiobis(4-t-octylphenol); nickel complexes of bis(4-t-octylphenyl)sulfone; nickel dibutyl dithiocarbamate; nickel salts of 4-hydroxy-3,-di-t-butylbenzyl phosphoric acid monoalkyl esters where alkyl is methyl, ethyl, propyl, butyl, etc; nickel complex of 2-hydroxy-4-methylphenyl undecyl ketone oxime, etc.

COP articles that may be protected from UV light with the present invention include, but are not limited to molded or extruded articles, coatings, tapes, and films. The articles may be formed by extrusion, sheet extrusion, injection molding, blow molding, injection blow molding, rotational or roto-molding, calendering, thermoforming, compression molding, vacuum molding, pressure molding, reaction injection molding, and other similar techniques known in the art. In addition, coatings may be applied by powder coating, extrusion coating, electrocoating, spraying, dipping, and other similar techniques known in the art.

### EXAMPLES

The following non-limiting examples are merely illustrative of the preferred embodiments of the present invention, and are not to be construed as limiting the invention, the scope of which is defined by the appended claims.

### Example

TOPAS 5013 (Ticona) resin is dry blended with additives as specified in the table below. These dry blends are then fed directly into an injection molder (Arburg, location). The barrel temperature increased incrementally toward the nozzle from 240, 255, 265 and 275 °C. The temperature of the mold is 121 °C.

### Additive concentrations in the examples below.

| | UV-3346 | UV-3853 | UV-1164 |
|---|---|---|---|
| A | 2670 ppm | | 330 ppm |
| B | | 2655 ppm | 345 ppm |
| C | 1778 ppm | 1000 ppm | 222 ppm |
| D | | | |

Duplicate samples of the injection molded plaques are evaluated for initial color (L,a,b color scale) and haze (measured as % haze). These samples are then placed into a xenon arc weatherometer (Ci65, Atlas weatherometer) running ASTM G155 (AZ-dry) conditions. Samples are periodically removed from the weatherometer and the color and haze measured. The results are found in the Tables below.

**Table 1. Total color shift (Delta E) as a function of xenon arc weatherometer exposure.**

| | 400 h | 800 h | 1200 h | 1600 h | 2000 h |
|---|---|---|---|---|---|
| UV-3346+UV-1164 | 0.23 | 0.61 | 1.16 | 2.02 | 3.2 |
| UV-3853 + UV-1164 | 0.23 | 0.34 | 0.6 | 0.89 | 1.35 |
| UV-3346 + UV-3853 + UV-1164 | 0.23 | 0.29 | 0.34 | 0.51 | 0.79 |
| no UV | 0.95 | 3.22 | 6.09 | | |

**Table 2. Yellowness Index (YI) as a function of xenon arc weatherometer exposure.**

| | 400 h | 800 h | 1200 h | 1600 h | 2000 h |
|---|---|---|---|---|---|
| UV-3346 + UV-1164 | 3.22 | 3.7 | 4.36 | 5.19 | 5.94 |
| UV-3853 + UV-1164 | 3.17 | 3.38 | 3.66 | 3.95 | 4.36 |
| UV-3346 + UV-3853 + UV-1164 | 3.01 | 3.11 | 3.35 | 3.54 | 3.77 |
| no UV | 3.94 | 6.34 | 9.75 | | |

**Table 3. Plaque clarity (% haze) as a function of xenon arc weatherometer exposure.**

| | 0 h | 800 h | 1600 h | 2000 h |
|---|---|---|---|---|
| UV-3346 + UV-1164 | 2.57 | 3.62 | 5.31 | 8.11 |
| UV-3853 + UV-1164 | 1.71 | 1.86 | 3.17 | 4.39 |
| UV-3346 + UV-3853 + UV-1164 | 1.36 | 2.05 | 2.8 | 3.72 |
| no UV | 2.51 | 8.51 | | |

## Claims

1. A polymeric article, comprising a cyclic olefin polymeric material, from 50 to 2,000 ppm of at least one ortho-hydroxy tris-aryl triazine light absorber, and from 250 ppm to 2000 ppm of at least one low molecular weight HALS having a molecular weight less than 500, wherein the weight ratio of HALS to triazine is from 1:1 to 20:1.

2. The polymeric article of claim 1, further comprising from 20 ppm to 5000 ppm of an oligomeric HALS.

3. The polymeric article of claim 1 wherein the ratio of HALS to triazine light absorber is from 7:1 to 10:1.

4. The polymeric article of claim 2, wherein the oligomeric HALS is an oligomer of formula (I) 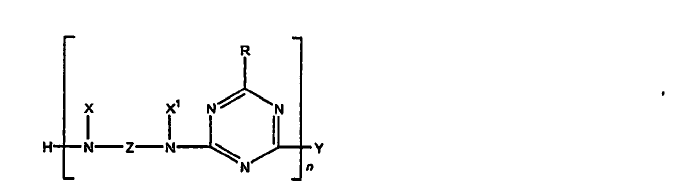 wherein R is morpholino, C₁-C₈ alkylamine, di(C₁-C₈) alkylamine, pyrrolidyl, or cyclohexylamine, X and X¹, which are the same or different, and are hydrogen, C₁-C₂₀ alkyl, or a radical of formula (II) 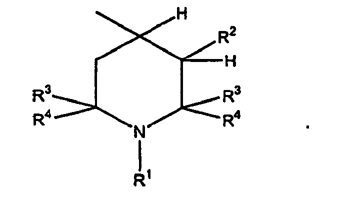 wherein R₁ represents hydrogen, C₂-C₃ hydroxyalkyl, C₁-C₈ alkyl, hydroxyl, or oxyl; R² represents hydrogen, C₁-C₈ alkyl, or benzyl; R³ and R⁴, are the same or different, and are C₁-C₈ alkyl, benzyl, or phenethyl, or form a C₅-C₁₀ cycloalkyl; Z is a straight chained or branched C₂-C₂₀ alkylene or a straight chained or branched C₂-C₂₀ alkylene chain interrupted by at least oxy, thio, or 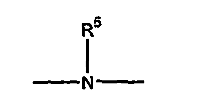 radical, wherein R⁵ is hydrogen, C₁-C₂₀ alkyl, or the radical of formula (II); C₅-C₁₀ cycloalkylene, 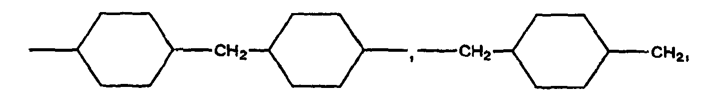 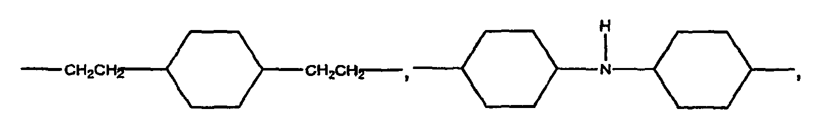 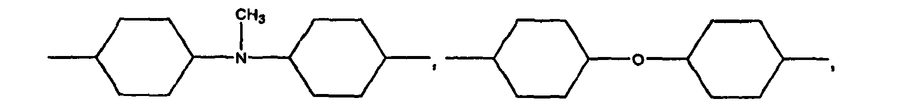 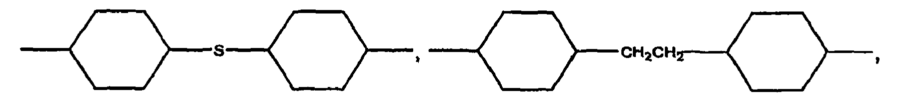 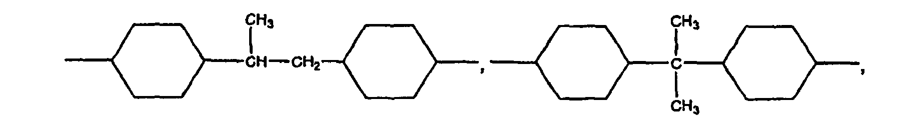 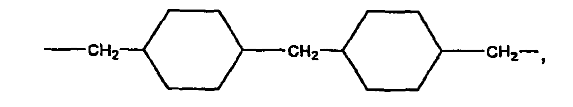 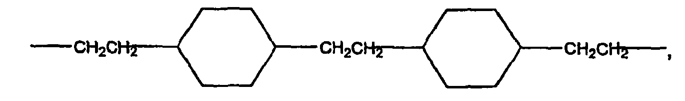 or 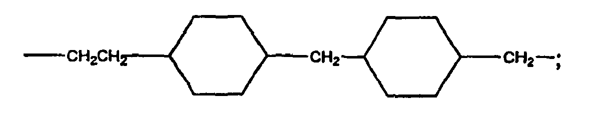 C₆-C₁₂ arylene, or C₈-C₁₄ aralkylene; n is an integer greater than 1; and Y is a halogen atom, C₁-C₈ alkylamine, di(C₁-C₈) alkylamine, pyrrolidyl, morpholino, cyclohexylamine, or 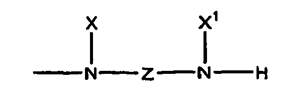 wherein X, X¹, and Z are as previously defined; with the proviso that at least one of X and X¹ is of formula (II).

5. The polymeric article of claim 4, wherein X and X¹ are the same or different, and are of formula (II), wherein R is morpholino or octylamine, R¹ is H or CH₃, R² is H, R³ and R⁴ are CH₃, Z is C₆H₁₂, and Y is morpholino, octylamine, or 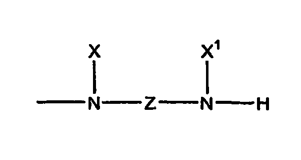 wherein X, X¹, and Z are as previously defined.

6. The polymeric article of claim 2, wherein the oligomeric HALS is selected from the group consisting of Bis(1-octyloxy-2,2,6,6,tetramethyl-4-piperdinyl)sebacate, dimethyl succinate polymer with 4-hydroxy-2,2,6,6-tetramethyl-1-piperidineethanol, a blend of dimethyl succinate polymer with 4-hydroxy-2,2,6,6-tetramethyl-1-piperidineethanol and N, N' -bis(2,2,6,6-tetramethyl-4-piperidinyl)-1,6-hexane diamine,polymer with 2,4,6-trichloro-1,3,5-triazine and 2,4,4-trimethyl-1,2-pentamine, 1,3,5-triazine-2,4,6-triamine, N,N'"[1,2-ethanediylbis [[[(4,6-bis[butyl(1,2,2,6,6-pentamethyl-4-piperidinyl)amino]-1,3,5-triazine-2-yl]imino]-3,1 prop anediyl]]-bis[N',N"-dibutyl-N',N"-bis(1,2,2,6,6-pentamethyl-4-piperidinyl), 1,3,5-triazine-2,4,6-triamine, N,N'" [1,2-ethanediylbis [[[(4,6-bis[butyl(1-cyclohexyloxy-2,2,6,6-tetraamethyl-4-piperidinyl)amino]-1,3,5-triazine-2-yl]imino]-3,1-propanediyl]]-bis[N',N"-dibutyl-N',N"-bis (1,2,2,6,6-pentamethyl-4-piperidinyl), N,N'-bis(2,2,6,6-tetramethyl-4-piperidinyl)-1,6-hexane diamine polymer with 2,4,6-trichloro-1,3,5-triazine and 2,4,4-trimethyl-1,2-pentamine, poly-methylpropyl-3-oxy-(4(2.2.6.6-tetramethyl)piperidinyl) siloxane, poly-methylpropyl-3-oxy-(4(1,2.2.6.6-pentamethyl)piperidinyl)siloxane, polyalkyl-1-oxa-diazaspirodecane products of a reaction of tetramethyl-7-oxa-3,20-diaza-21-oxo-dispiro (5.1.11.12)heneicosane with epichlorohydrin, 1,3-propanediamine, N,N"-1,2-ethanediylbis-polymer with 2,4,6-trichloro-1.3.5-triazine, reaction products with N-butyl-2,2,6,6-tetramethyl-4-piperidinamine.

7. The polymeric article of claim 1 wherein the low molecular weight HALS comprises 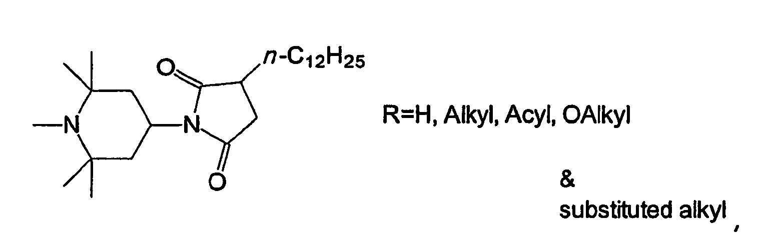 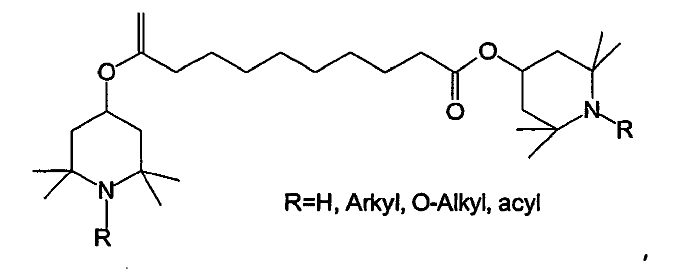 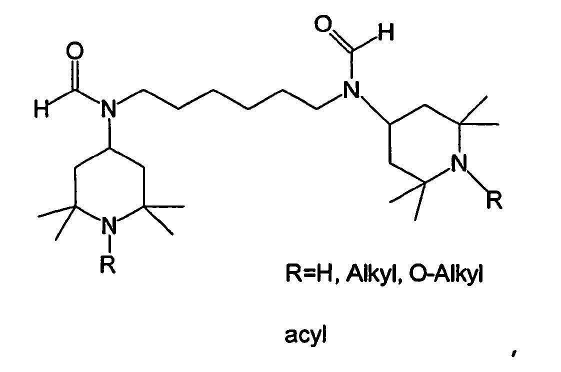 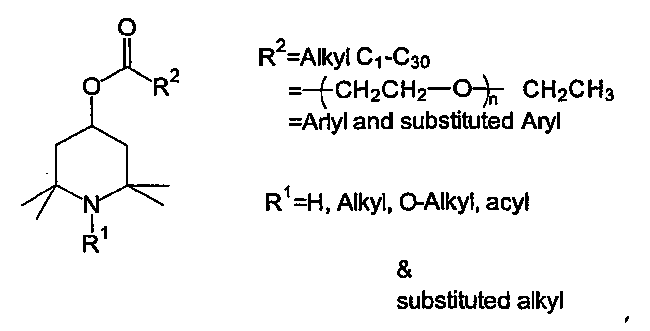 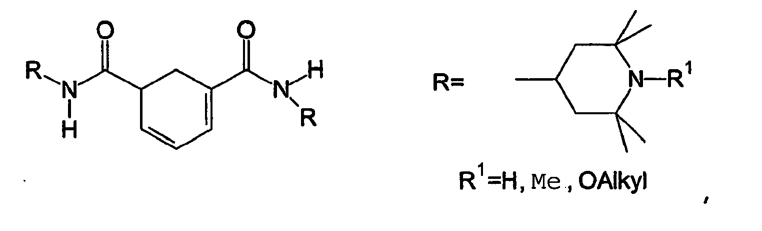 Bis(1-octyloxy-2,2,6,6,tetramethyt-4-piperdinyl)sebacate, and Dimethyl succinate polymer with 4-hydroxy-2,2,6,6-tetramethyl-1-piperidineethanol.

8. The polymeric article of claim 1, wherein the triazine light absorber is of formula (III) 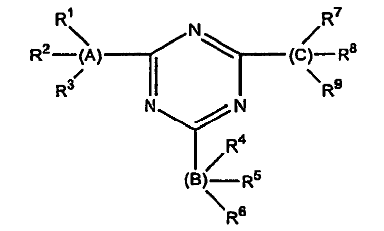 wherein 2 or 3 of A, B and C are aromatic, at least one of A, B and C is substituted by a hydroxy group ortho of the point of attachment to the triazine ring, and each of R¹ through R⁹ is selected from the group consisting of hydrogen, hydroxy, alkyl, alkoxy, sulfonic, carboxy, halo, haloalkyl and acylamino.

9. The polymeric article of claim8 , wherein the triazine light absorber is of formula (IV) 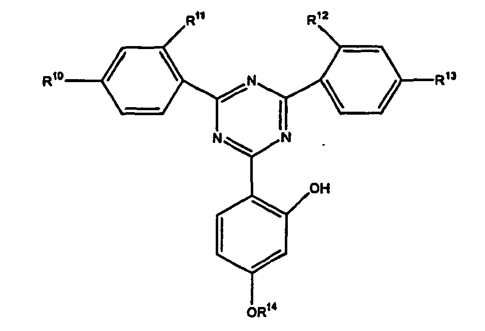 where R¹⁰, R¹¹, R¹² and R¹³ are the same or different, and are individually selected from the group consisting of hydrogen, hydroxy, alkyl, alkoxy, sulfonic, carboxy, halo, haloalkyl and acylamino, and R¹⁴ is hydrogen or C₁ to C₁₈ alkyl.

10. The polymeric article of claim 9, wherein R¹⁰, R¹¹, R¹² and R¹³ H or CH₃, and R¹⁴ is hydrogen, C₆H₁₃, or C₈H₁₇.

11. The polymeric article of claim 8, wherein the triazine light absorber is selected from the group consisting of 2-(4,6-Diphenyl-1,3,5-triazine-2-yl)-5-(hexyl)oxy-phenol, 2-(4-((2-hydroxy-3-dodecyloxypropyl)-oxyl-2-hydroxyphenyl)-4,6-bis(2,4-dimethylphenyl)-1, 3,5-triazine, 2-(4-((2-hydroxy-3-tridecyloxypropyl)-oxyl-2-hydroxyphenyl)-4,6-bis(2,4-dimethylphenyl)-1,3,5-triazine, and 2-(4-((2-hydroxy-3-isooctyloxyypropyl)-oxyl-2-hydroxyphenyl)-4,6-bis(2,4-dimethylphenyl)-1, 3,5-triazine.

## Patentansprüche

1. Polymergegenstand, umfassend ein Cycloolefinpolymermaterial, 50 bis 2000 ppm mindestens eines ortho-Hydroxytrisaryltriazin-Lichtabsorbers und 250 ppm bis 2000 ppm mindestens eines niedermolekularen HALS mit einer molaren Masse von weniger als 500, wobei das Gewichtsverhältnis von HALS zu Triazin 1:1 bis 20:1 beträgt.

2. Polymergegenstand nach Anspruch 1, ferner umfassend 20 ppm bis 5000 ppm eines oligomeren HALS.

3. Polymergegenstand nach Anspruch 1, wobei das Gewichtsverhältnis von HALS zu Triazin-Lichtabsorber 7:1 bis 10:1 beträgt.

4. Polymergegenstand nach Anspruch 2, wobei das oligomere HALS ein Oligomer der Formel (I) 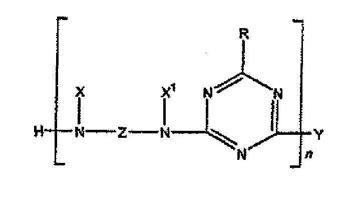 ist, worin R für Morpholino, C₁-C₈-Alkylamin, Di(C₁-C₈)alkylamin, Pyrrolidyl oder Cyclohexylamin steht, X und X¹ gleich oder verschieden sind und für Wasserstoff, C₁-C₂₀-Alkyl oder einen Rest der Formel (II) 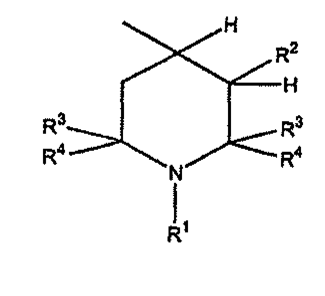 stehen, worin R¹ für Wasserstoff, C₂-C₃-Hydroxyalkyl, C₁-C₈-Alkyl, Hydroxyl oder Oxyl steht; R² für Wasserstoff, C₁-C₈-Alkyl oder Benzyl steht; R³ und R⁴ gleich oder verschieden sind und für C₁-C₈-Alkyl, Benzyl oder Phenethyl stehen oder ein C₅-C₁₀-Cycloalkyl bilden; Z für ein geradkettiges oder verzweigtes C₂-C₂₀-Alkylen oder eine geradkettige oder verzweigte C₂-C₂₀-Alkylenkette steht, die unterbrochen ist durch mindestens einen Oxy-, Thio- oder 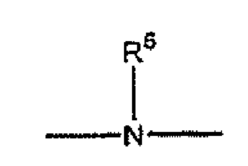 Rest, worin R⁵ steht für Wasserstoff, C₁-C₂₀-Alkyl oder den Rest der Formel (II), C₅-C₁₀-Cycloalkylen, 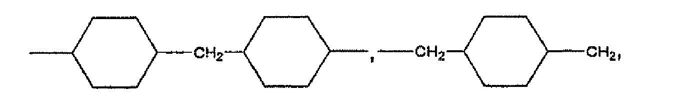 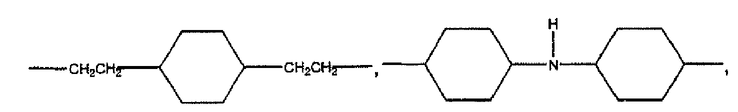 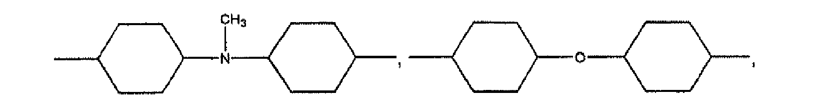 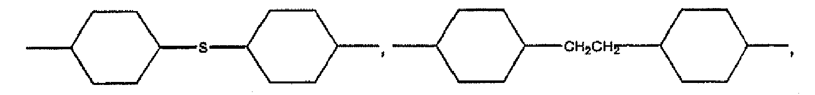 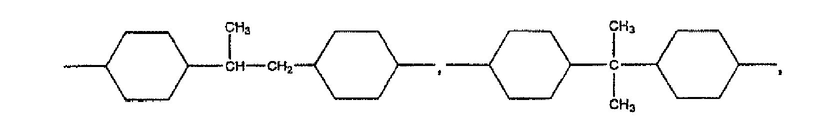 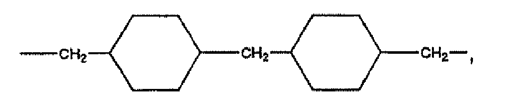 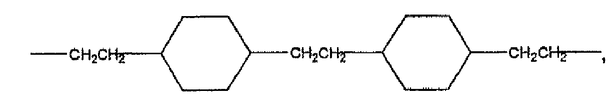 oder 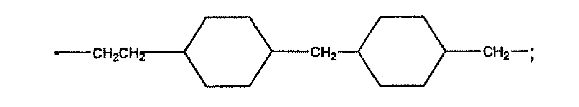 C₆-C₁₂-Arylen oder C₈-C₁₄-Aralkylen; n eine ganze zahl größer als 1 ist und Y für ein Halogenatom, C₁-C₈-Alkylamin, Di(C₁-C₈)alkylamin, Pyrrolidyl, Morpholino, Cyclohexylamin oder 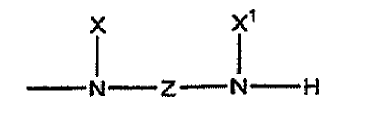 steht, worin X, X¹ und Z die oben angegebene Bedeutung besitzen, mit der Maßgabe, daß mindestens eine der Gruppen X und X¹ der Formel (II) entspricht.

5. Polymergegenstand nach Anspruch 4, wobei X und X¹ gleich oder verschieden sind und der Formel (II) entsprechen, worin R für Morpholino oder Octylamin steht, R¹ für H oder CH₃ steht, R² für H steht, R³ und R⁴ für CH₃ stehen, Z für C₆H₁₂ steht und Y für Morpholino, Octylamin oder 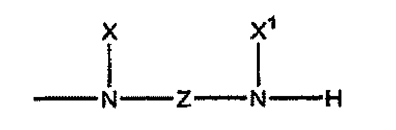 steht, worin X, X¹ und Z die oben angegebene Bedeutung besitzen.

6. Polymergegenstand nach Anspruch 2, wobei das oligomere HALS aus der Gruppe bestehend aus Bis(1-octyloxy-2,2,6,6-tetramethyl-4-piperidinyl)-sebacat, Dimethylsuccinatpolymer mit 4-Hydroxy-2,2,6,6-tetramethyl-1-piperidinethanol, einer Mischung von Dimethylsuccinatpolymer mit 4-Hydroxy-2,2,6,6-tetramethyl-1-piperidinethanol und N,N'-Bis(2,2,6,6-tetramethyl-4-piperidinyl)-1,6-hexandiamin, Polymer mit 2,4,6-Trichlor-1,3,5-triazin und 2,4,4-Trimethyl-1,2-pentamin, 1,3,5-Triazin-2,4,6-triamin, N,N"'[1,2-Ethandiyl-bis[[[(4,6-bis[butyl(1,2,2,6,6-pentamethyl-4-piperidinyl)amino]-1,3,5-triazin-2-yl]imino]-3,1-propandiyl]]-bis[N',N"-dibutyl-N',N"-bis-(1,2,2,6,6-pentamethyl-4-piperidinyl), 1,3,5-Triazin-2,4,6-triamin, N,N'''-[1,2-Ethandiyl-bis[[[(4,6-bis[butyl(1-cyclohexyloxy-2,2,6,6-tetramethyl-4-piperidinyl)amino]-1,3,5-triazin-2-yl]imino]-3,1-propandiyl]]-bis[N',N''-dibutyl-N',N''-bis(1,2,2,6,6-pentamethyl-4-piperidinyl), N,N'-Bis(2,2,6,6-tetramethyl-4-piperidinyl)-1,6-hexandiamin, Polymer mit 2,4,6-Trichlor-1,3,5-triazin und 2,4,4-Trimethyl-1,2-pentamin, Poly-methylpropyl-3-oxy-(4-(2,2,6,6-tetramethyl)-piperidinyl)siloxan, Polymethylpropyl-3-oxy-(4-(1,2,2,6,6-pentamethyl)-piperidinyl)siloxan, Polyalkyl-1-oxadiazaspirodecan-Reaktionsprodukte einer Reaktion von Tetramethyl-7-oxa-3,20-diaza-21-oxodispiro[5.1.11.12]heneicosan mit Epichlorhydrin, Reaktionsprodukte von 1,3-Propandiamin, N,N''-1,2-Ethandiylbis-, Polymer mit 2,4,6-Trichlor-1,3,5-triazin, mit N-Butyl-2,2,6,6-tetramethyl-4-piperidinamin ausgewählt ist.

7. Polymergegenstand nach Anspruch 1, wobei das niedermolekulare HALS 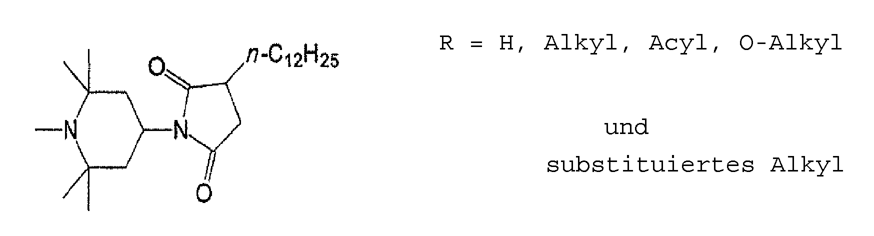 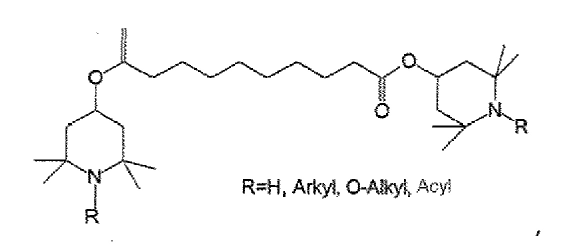 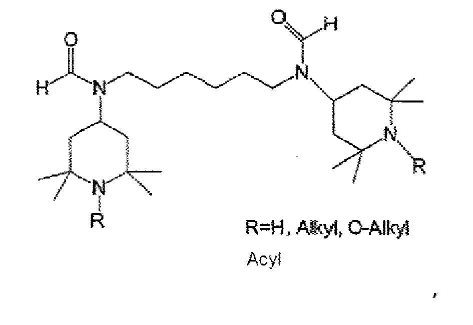 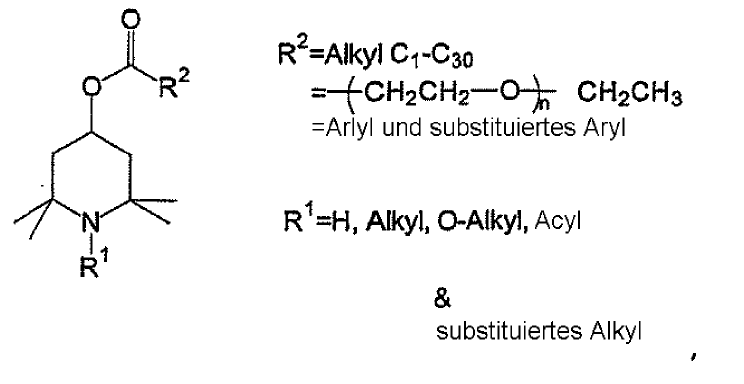 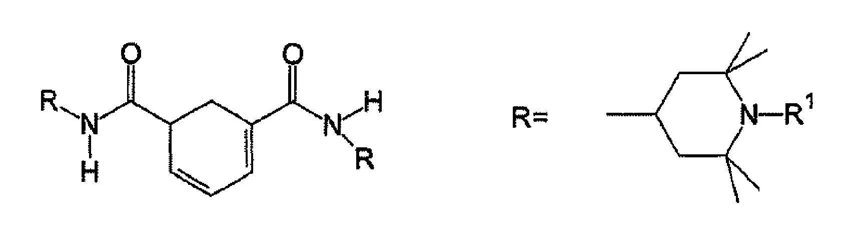 R¹ = H, Me, OAlkyl,
Bis(1-octyloxy-2,2,6,6-tetramethyl-4-piperidinyl)-sebacat und Dimethylsuccinatpolymer mit 4-Hydroxy-2,2,6,6-tetramethyl-1-piperidinethanol umfaßt.

8. Polymergegenstand nach Anspruch 1, wobei der Triazin-Lichtabsorber der Formel (III) entspricht 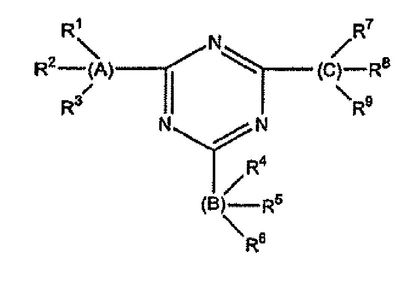 worin 2 oder 3 der Gruppen A, B und C aromatisch sind, mindestens eine der Gruppen A, B und C durch eine Hydroxygruppe in ortho-Stellung zum Anknüpfungspunkt des Triazinrings substituiert ist und R¹ bis R⁹ jeweils aus der Gruppe bestehend aus Wasserstoff, Hydroxy, Alkyl, Alkoxy, Sulfon, Carboxy, Halogen, Halogenalkyl und Acylamino ausgewählt sind.

9. Polymergegenstand nach Anspruch 8, wobei der Triazin-Lichtabsorber der Formel (IV) entspricht 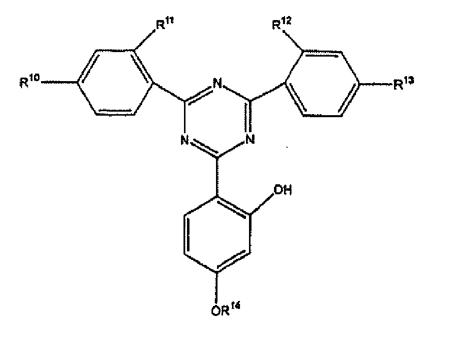 worin R¹⁰, R¹¹, R¹² und R¹³ gleich oder verschieden sind und individuell aus der Gruppe bestehend aus Wasserstoff, Hydroxy, Alkyl, Alkoxy, Sulfon, Carboxy, Halogen, Halogenalkyl und Acylamino ausgewählt sind und R¹⁴ für Wasserstoff oder C₁-bis C₁₈-Alkyl steht.

10. Polymergegenstand nach Anspruch 9, wobei R¹⁰, R¹¹, R¹² und R¹³ für H oder CH₃ stehen und R¹⁴ für Wasserstoff, C₆H₁₃ oder C₈H₁₇ steht.

11. Polymergegenstand nach Anspruch 8, wobei der Triazin-Lichtabsorber ausgewählt ist aus der Gruppe bestehend aus 2-(4,6-Diphenyl-1,3,5-triazin-2-yl)-5-(hexyl)oxyphenol, 2-(4-((2-Hydroxy-3-dodecyloxypropyl)-oxyl-2-hydroxyphenyl)-4,6-bis(2,4-dimethylphenyl)-1,3,5-triazin, 2-(4-((2-Hydroxy-3-tridecyloxypropyl)-oxyl-2-hydroxyphenyl)-4,6-bis(2,4-dimethylphenyl)-1,3,5-triazin und 2-(4-((2-Hydroxy-3-isooctyloxypropyl)-oxyl-2-hydroxyphenyl)-4,6-bis(2,4-dimethylphenyl)-1,3,5-triazin.

## Revendications

1. Article polymère, comprenant un matériau polymère d'oléfine cyclique, de 50 à 2 000 ppm d'au moins une ortho-hydroxy-tris-aryltriazine photo-absorbante et de 250 ppm à 2 000 ppm d'au moins un HALS de basse masse molaire ayant une masse molaire inférieur à 500, dans lequel le rapport en poids du (ou des) HALS sur la triazine étant de 1:1 à 20:1.

2. Article polymère selon la revendication 1, comprenant en outre de 20 ppm à 5 000 ppm d'un HALS oligomérique.

3. Article polymère selon la revendication 1, dans lequel le rapport du ou des HALS sur la triazine photo-absorbante est de 7:1 à 10:1.

4. Article polymère selon la revendication 2, dans lequel le HALS oligomérique est un oligomère de formule (I) 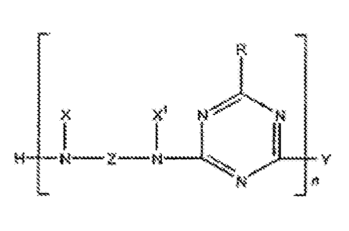 dans laquelle R est un groupe morpholino, alkylamine en C₁ à C₈, di-alkylamine en C₁ à C₈, pyrrolidyle ou cyclohexylamine, X et X¹ qui sont identiques ou différents, et sont un atome d'hydrogène, un groupe alkyle en C₁ à C₂₀ ou un radical de formule (II) 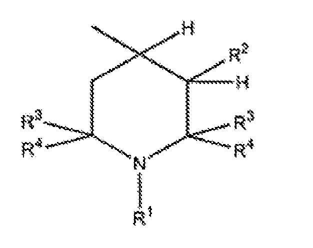 dans laquelle R¹ représente un atome d'hydrogène, un groupe hydroxyalkyle en C₂ à C₃, alkyle en C₁ à C₈, hydroxyle ou oxyle ; R² représente un atome d'hydrogène, un groupe alkyle en C₁ à C₈ ou benzyle ; R³ et R⁴ sont identiques ou différents et sont un groupe alkyle en C₁ à C₈, benzyle ou phénéthyle ou forment un groupe cycloalkyle en C₅ à C₁₀ ; Z est un groupe alkylène en C₂ à C₂₀ à chaîne linéaire ou ramifiée ou un groupe alkylène en C₂ à C₂₀ à chaîne linéaire ou ramifiée, la chaîne étant interrompue par au moins un radical oxy, thio ou un radical 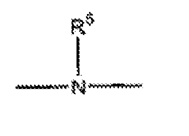 où R⁵ est un atome d'hydrogène, un groupe alkyle en C₁ à C₂₀ ou le radical de formule (II) ; un groupe cycloalkylène en C₅ à C₁₀, 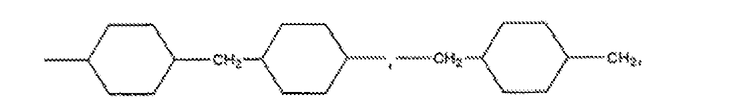 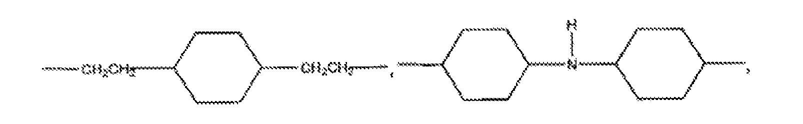 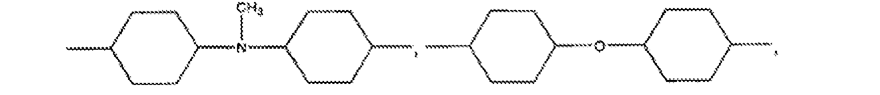 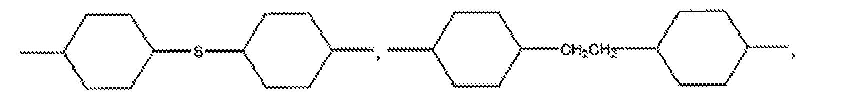 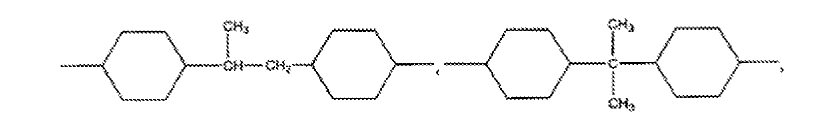 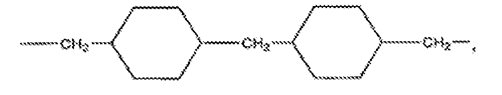 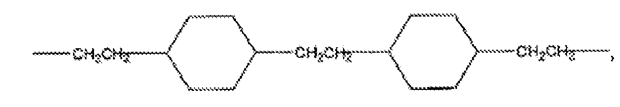 or 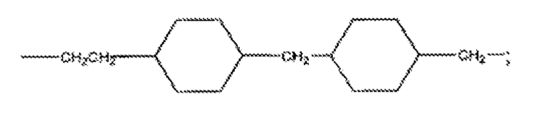 un groupe arylène en C₆ à C₁₂ ou aralkylène en C₈ à C₁₄ ; n est un nombre entier supérieur à 1 ; et Y est un atome d'halogène, un groupe alkylamine en C₁ à C₈, di-alkylamine en C₁ à C₈, pyrrolidyle, morpholino, cyclohexylamine ou un radical 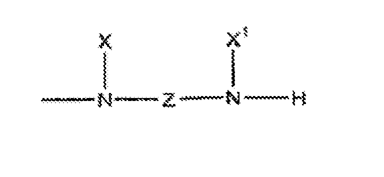 dans lequel X, X¹ et Z sont tels que définis précédemment ; à condition qu'au moins l'un des X et X¹ soit de formule (II).

5. Article polymère selon la revendication 4, dans lequel X et X¹ sont identiques ou différents et sont de formule (II), dans laquelle R est un groupe morpholino ou octylamine, R¹ est H ou CH₃, R² est H, R³ et R⁴ sont CH₃, Z est C₆H₁₂ et Y est un groupe morpholino, octylamine ou un radical 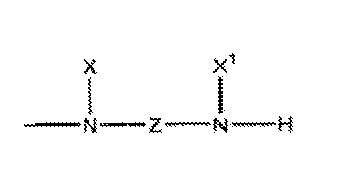 dans lequel X, X¹ et Z sont tels que définis précédemment.

6. Article polymère selon la revendication 2, dans lequel le HALS oligomérique est choisi dans le groupe comprenant le sébaçate de bis(1-octyloxy-2,2,6,6-tétraméthyle-4-pipéridinyle), un polymère du succinate de diméthyle avec le 4-hydroxy-2,2,6,6-tétraméthyl-1-pipéridine-éthanol, un mélange de polymère du succinate de diméthyl avec le 4-hydroxy-2,2,6,6-tétraméthyl-1-pipéridine-éthanol et le polymère de N,N'-bis(2,2,6,6-tétraméthyl-4-pipéridinyl)-1,6-hexane-diamine avec la 2,4,6-trichloro-1,3,5-triazine et la 2,4,4-triméthyl-1,2-pentamine, la 1,3,5-triazine-2,4,6-triamine, N,N'''-[1,2-éthanediylbis[[[(4,6-bis[butyl(1,2,2,6,6-pentaméthyl-4-pipéridinyl)amino]-1,3,5-triazine-2-yl]imino]-3,1-propanediyl]]-bis[N',N"-dibutyl-N',N"-bis(1,2,2,6,6-pentaméthyl-4-pipéridinyl), le 1,3,5-triazine-2,4-6-triamine, N,N'''[1,2-éthanediylbis-[[[(4,6-bis[butyl(1-Cyclohexyloxy-2,2,6,6-tétraméthyl-4-pipéridinyl)amino]-1,3,5-triazine-2-yl]imino]-3,1-propanediyl]]-bis[N',N"-dibutyl-N',N"-bis(1,2,2,6,6-pentaméthyl-4-pipéridinyl), le polymère N,N'-bis(2,2,6,6-tétraméthyl-4-pipéridinyl)-1,6-hexane diamine avec la 2,4,6-trichloro-1,3,5-triazine et la 2,4,4-triméthyl-1,2-pentamine, le poly-méthylpropyl-3-oxy-(4(2,2,6,6-tétraméthyl)pipéridinyl)siloxane, le poly-méthylpropyl-3-oxy-(4(1,2,2,6,6-pentaméthyl)pipéridinyl)siloxane, les produits polyalkyl-1-oxa-diazaspirodécane d'une réaction du tétraméthyl-7-oxa-3,20-diaza-21-oxo-dispiro (5.1.11.12)hénéicosane avec de l'épichlorohydrine, le polymère 1,3-propanediamine,N,N"-1,2-éthanediylbis avec la 2,4,6-trichloro-1,3,5-triazine, les produits de réactions de la N-butyl-2,2,6,6-tétraméthyl-4-pipéridinamine.

7. Article polymère selon la revendication 1, dans lequel le HALS de basse masse molaire comprend 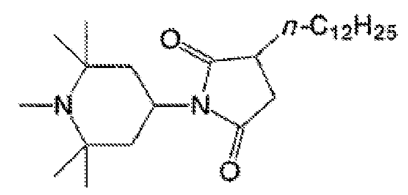 R=H, un groupe alkyle, acyle, O-alkyle et alkyle substitué, 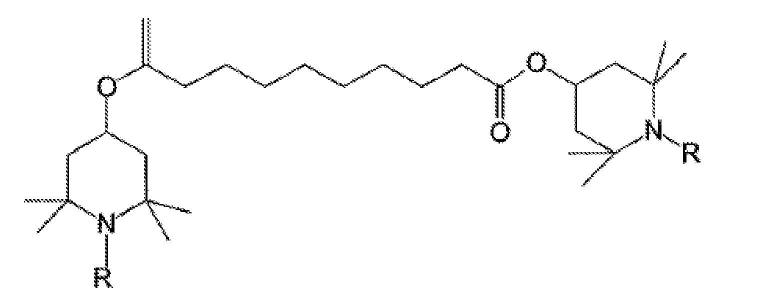 R=H, un groupe alkyle, O-alkyle, acyle, 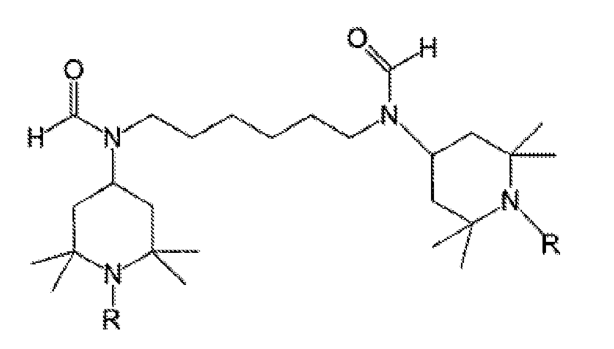 R=H, un groupe alkyle, O-alkyle, acyle, 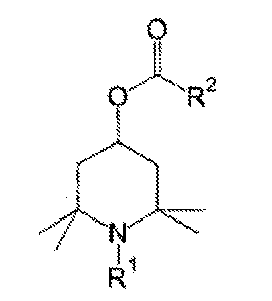 R² = un groupe alkyle en C₁ à C₃₀,
= -(-CH₂CH₂-O)ₙ- CH₂CH₃
= un groupe aryle et aryle substitué,
R¹ = H, un groupe alkyle, O-alkyle, acyle et alkyle substitué 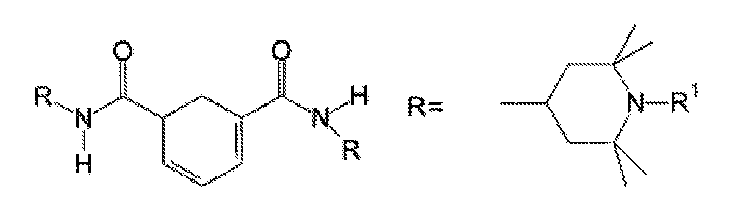 R1 = H, Me, O-alkyle,
le sébaçate de bis(1-octyloxy-2,2,6,6-tétraméthyl-4-pipéridinyl) et le polymère du succinate de diméthyl avec le 4-hydroxy-2,2,6,6-tétraméthyl-1-pipéridine-éthanol.

8. Article polymère selon la revendication 1, dans lequel le photo-absorbant triazine est de formule (III) 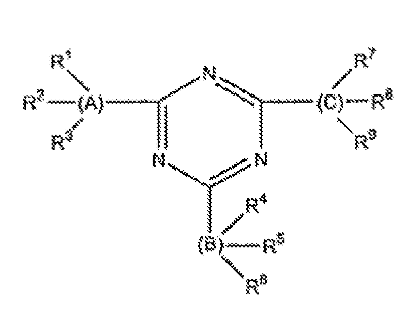 dans laquelle 2 ou 3 parmi A, B et C sont aromatiques, au moins l'un des A, B et C est substitué par un group hydroxy en ortho du point de fixation au cycle de la triazine et chaque radical R¹ à R⁹ est choisi dans le groupe comprenant un atome d'hydrogène, un groupe hydroxy, alkyle, alcoxy, sulfonique, carboxy, halogéno, halogénoalkyle et acylamino.

9. Article polymère selon la revendication 8, dans lequel la triazine photo-absorbante est de formule (IV) 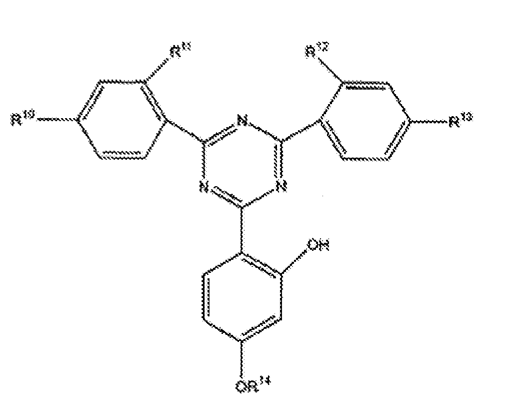 dans laquelle R¹⁰, R¹¹, R¹² et R¹³ sont identiques ou différents et sont choisis individuellement dans le groupe comprenant un atome d'hydrogène, un groupe hydroxy, alkyle, alcoxy, sulfonique, carboxy, halogéno, halogénoalkyle et acylamino et R¹⁴ est un atome d'hydrogène ou un groupe alkyle en C₁ à C₁₈.

10. Article polymère selon la revendication 9, dans lequel R¹⁰, R¹¹, R¹² et R¹³ sont H ou CH₃ et R¹⁴ est un atome d'hydrogène, C₆H₁₃ ou C₈H₁₇.

11. Article polymère selon la revendication 8, dans lequel la triazine photo-absorbante est choisie dans le groupe comprenant le 2-(4,6-diphényl-1,3,5-triazine-2-yl)-5-(hexyl)oxy-phénol, la 2-(4-((2-hydroxy-3-dodécyloxypropyl)-oxyl-2-hydroxyphényl)-4,6-bis(2,4-diméthylphényl)-1-3,5-triazine, la 2-(4-((2-hydroxy-3-tridécyloxypropyl)-oxyl-2-hydroxyphényl)-4,6-bis(2,4-diméthylphényl)-1,3,5-triazine et la 2-(4-((2-hydroxy-3-isooctyloxypropyl)-oxyl-2-hydroxyphényl)-4,6-bis(2,4-diméthylphényl)-1-3,5-triazine.
